# EUROPEAN PATENT APPLICATION

(11) **EP 4 345 675 A1**
(43) Date of publication of application: **03.04.2024**
(21) Application number: 22198359.6
(22) Date of filing: 28.09.2022
(51) Int. Cl.: G06F 30/20, G06F 30/12, G06F 111/20, G06F 119/06, G06F 113/04

(54) **USER INTERFACE FOR PARAMETRIZING SIMULATION OF ENERGY SYSTEMS**

(71) Applicant: Siemens Aktiengesellschaft, 80333 München (DE)
(72) Inventor: Held, Harald, 85461 Bockhorn (DE); Lee, Benjamin, 90409 Nürnberg (DE); Liebig, Veronika, 80339 München (DE); Majewski, Kurt, 81541 München (DE); Seydenschwanz, Martin, 81541 München (DE); Wieghardt, Jan, 81475 München (DE); Wiles, Jeremy Ralph, 38073 Vigo Cavedine (IT)
(74) Representative: Siemens Patent Attorneys

(57) **Abstract**

A computer-implemented method of parameterizing a simulation of an energy system (90) is disclosed. A user interface is provided that enables a user to configure model functions of operating modes of assets of the energy system by using clear-text representations of the model functions.

## Description

### TECHNICAL FIELD

Various examples of the disclosure generally pertain to parameterizing a simulation of an energy system that includes multiple assets. Various examples of the disclosure specifically pertain to providing a user interface that enables a user to configure functions determining energy in/out-flow or energy loss of assets of the energy system.

### BACKGROUND

Energy systems, e.g., power grids, power plants, energy storage systems, etc. can be complex and their behavior can be impacted by the operation of individual assets (also referred to as power equipment) forming the energy system.

Example assets include generators, gas turbines, batteries, photovoltaic power sources, etc. Example assets also include loads, it e.g., electrical loads or thermal loads or hydrogen loads.

To analyze such assets, and thereby the behavior of the energy system, one needs to be able to analyze technical behavior of the asset over its lifetime.

The behavior of an energy system can be simulated over its lifetime (e.g., 20 years). An output of the simulation can be used to evaluate the energy system according to lifecycle operating costs and technical feasibility (e.g., blackouts, unmet load, total exports).

To enable the simulation of the energy system, the operation of the assets forming the energy system is to be defined as program code for execution by at least one processor. The program code can either be defined at compile or run-time. The expertise required to build respective models is significant, since it must contain the full description of how the asset behaves under possible scenarios.

### SUMMARY

According to examples, a simulation of an energy system that includes multiple assets is facilitated. According to examples, the simulation can be parameterized. In particular, it is possible to update model functions underlying the simulation, e.g., at runtime. Users are enabled to create new model functions describing the behavior of assets flexibly. This enables to accurately model a wide variety of different types of assets and/or energy systems.

A computer-implemented method of parameterizing a simulation of an energy system is disclosed. The energy system includes multiple assets. The simulation is based on operating modes defined for each asset. Each operating mode is associated with a respective model function that determines energy in/out-flow or energy loss of the respective asset depending on at least one of one or more state variables or one or more parameters of the respective asset or one or more parameters. The computer-implemented method includes providing a first user interface that enables a user to configure the model functions of the operating modes by using clear-text representations of the model functions. The computer-implemented method includes providing a second user interface that enables the user to set one or more values for the at least one of the one or more state variables or the one or more parameters of each model function. The computer-implemented method includes, upon setting the one or more values, executing the simulation.

A computing device is disclosed that includes at least one processor and a memory. The at least one processor is configured to load program code from the memory and to execute the program code. The at least one processor, upon executing the program code, is configured to execute a method of parametrizing a simulation of an energy system. The energy system includes multiple assets. The simulation is based on operating modes defined for each asset. Each operating mode is associated with a respective model function that determines energy in/out-flow or energy loss of the respective asset depending on at least one of one or more state variables or one or more parameters of the respective asset or one or more parameters. The computer-implemented method includes providing a first user interface that enables a user to configure the model functions of the operating modes by using clear-text representations of the model functions. The computer-implemented method includes providing a second user interface that enables the user to set one or more values for the at least one of the one or more state variables or the one or more parameters of each model function. The computer-implemented method includes, upon setting the one or more values, executing the simulation.

A computer program or a computer-program product or a computer-readable storage medium comprises program code. The program code can be loaded and executed by at least one processor. Execution of the program code causes the at least one processor to perform a method of parametrizing a simulation of an energy system. The energy system includes multiple assets. The simulation is based on operating modes defined for each asset. Each operating mode is associated with a respective model function that determines energy in/out-flow or energy loss of the respective asset depending on at least one of one or more state variables or one or more parameters of the respective asset or one or more parameters. The computer-implemented method includes providing a first user interface that enables a user to configure the model functions of the operating modes by using clear-text representations of the model functions. The computer-implemented method includes providing a second user interface that enables the user to set one or more values for the at least one of the one or more state variables or the one or more parameters of each model function. The computer-implemented method includes, upon setting the one or more values, executing the simulation.

It is to be understood that the features mentioned above and those yet to be explained below may be used not only in the respective combinations indicated, but also in other combinations or in isolation without departing from the scope of the invention.

### BRIEF DESCRIPTION OF THE DRAWINGS

- FIG. 1: schematically illustrates an energy system including multiple assets according to various examples.
- FIG. 2: is a schematic illustration of a computing device according to various examples.
- FIG. 3: FIG. 4, and FIG. 5 are flowcharts of methods according to various examples.

### DETAILED DESCRIPTION

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Various examples of the disclosure generally pertain to parameterizing and then executing a simulation of an energy system. The simulation can be time resolved. I.e., behavior of the energy system can be determined for multiple time steps. The simulation can be state dependent, i.e., behavior of each asset of the energy system can depend on multiple operating modes and on the results of previous time steps.

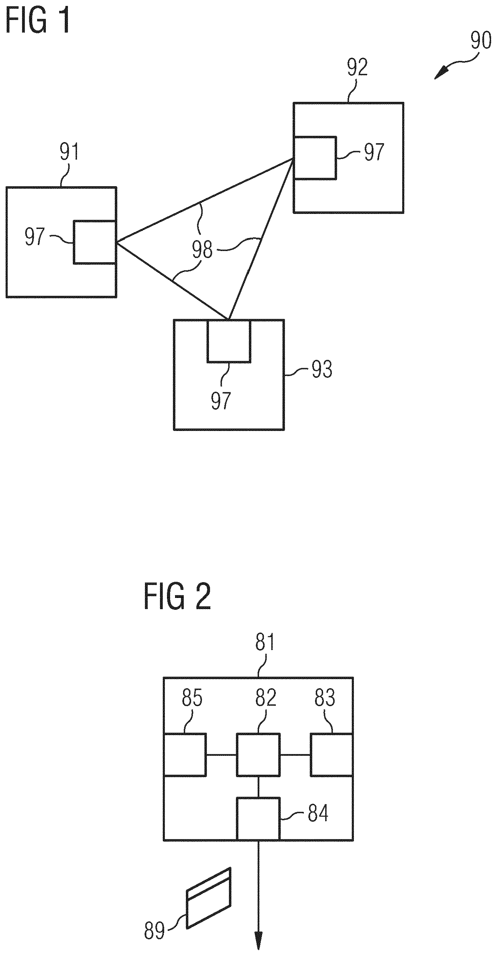

An example energy system 90 is illustrated in FIG. 1. The energy system 90 includes multiple assets 91-93.

These assets 91-93 are connected by energy exchange lines 98 via respective interfaces 97. Energy can be output via the interfaces 97 or can be input via the interfaces 97. They can also be an energy loss at each asset 91-93.

As a general rule, various kinds and types of energy systems can be subject to the techniques disclosed herein, e.g., electrical power grids, power plants, hydrogen fuel cells, photovoltaic systems, etc. Depending on the type of the energy system, the energy exchange lines 98 can be implemented differently, e.g., as electrical wiring to convey electrical power, or as fuel lines to convey, e.g., hydrogen or gas or liquid fuel.

FIG. 2 schematically illustrates a computing device 81 according to various examples. The computing device 81 includes a processor 82 and a memory 83. The processor 82 can load and execute program code stored in the memory 83. The computing device 81 also includes a communication interface 84. For instance, it would be possible to output control data 89 via the communication interface 84 to thereby control assets such as the assets 91-93 of an energy system such as the energy system 90. Also, a design process of such assets could be controlled.

The computing device 81 also includes a human machine interface 85 via which a user interface can be provided to a user. The user interface could be, e.g., a graphical user interface, e.g., a web-based user interface.

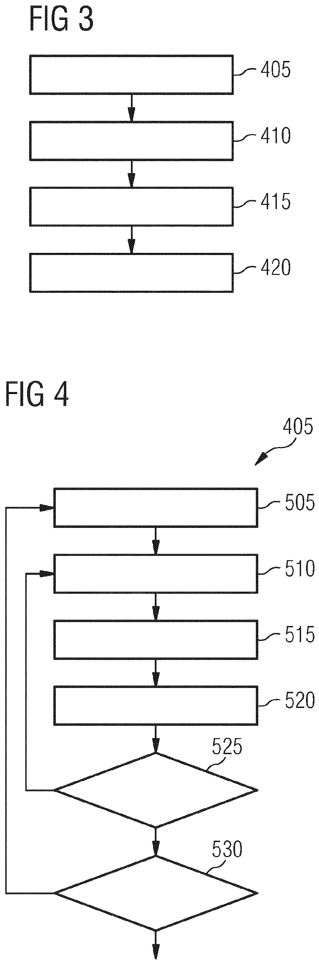

The processor 82 can load program code from the memory 83 and execute the program code. The processor, upon executing the program code, can perform techniques as disclosed herein. For instance, the processor 82 can perform techniques as disclosed in connection with FIG. 3.

FIG. 3 is a flowchart of a method according to various examples. The method of FIG. 3 pertains to parameterizing a simulation of an energy system such as the energy system 90. For instance, the method of FIG. 3 may be executed by a computing device such as the computing device 81. The method of FIG. 3 may be executed by the processor 82 upon loading program code from the memory 83 and upon executing that program code.

The simulation could be part of a design process for an asset. The simulation could also pertain to modelling behavior of a digital twin of a real-life energy system.

At box 405, a first user interface is provided. The first user interface enables the user to configure model functions associated with multiple assets of the to be simulated energy system.

For instance, each asset may be associated with one or more operating modes, wherein each one of the operating modes is associated with at least partly different model functions. I.e., operating modes may be asset-specific; and model functions may be specific to operating modes.

The model functions can generally describe the behavior of the respective asset, e.g., when operating in a certain operating mode. For instance, a model function can determine the energy in/out-flow or energy loss of the respective asset depending on one or more state variables of the respective asset. The model functions can define a model for the operation of the respective asset. The model functions can link state variables to energy in-flow and out-flow. This dependency can depend on the values of the state variables (or simply variables) and values of parameters (e.g., proportionality parameters, exponents, etc.) of the model functions. The model functions can also describe costs or utilization of resources, such as fuel, gas, ...

Example state variables are temperature, state of charge, or state of health (ageing) of the respective asset. Example state variables also include respective derivatives of temperature, state of charge or state of health with respect to time.

Next, at box 410, it is possible to provide a second user interface that enables the user to set one or more values for variables and/or parameters of the model functions. For instance, it would be possible that the second user interface enables the user to set a time series of the values of the variables and/or parameters of the model functions. Thus, box 410 enables to instantiate a specific instance of the simulation, using certain values for the state variables and/or parameters.

Then, upon setting the one or more values, the simulation can be executed at box 415.

At optional box 420, it would be possible to provide control data to control the assets of the simulated energy system (e.g., corresponding to a digital twin simulation where the actual energy system is also physically implemented) and/or re-design at least one of the assets. This can be based on an output of the simulation that has been executed at box 415.

FIG. 4 is a flowchart of a method according to various examples. The method of FIG. 4 pertains to parameterizing a simulation of an energy system that includes multiple assets. More specifically, the method of FIG. 4 pertains to configuring operation modes of the assets. The method of FIG. 4 implements box 405, i.e., corresponds to providing the first user interface.

As a general rule, it is possible that the behavior of the assets of the energy system is captured as a series of states, also referred to as operating modes. This variant of the disclosure is illustrated in FIG. 4.

Initially, at box 505, a user may select a current asset through the user interface.

Next, at box 510, a current operating mode can be selected. For instance, the user may create a new operating mode or may activate a predetermined operating mode for that asset.

As a general rule, the operating modes describe the behavior of the respective asset in different types of operation, e.g., "Off", "Synchronization", "On", "Charging", "Discharging", "Overload", to give just a few examples.

For these operating modes, it would be possible to create a transition matrix that defines the allowed future operation modes given the current operating mode that is determined at box 5101. I.e., each operating mode can be associated with the transition matrix that defines the transition criteria to transition to operation and another one of the operating modes.

Generally, the user may be able to edit, add/create or remove/delete operating modes via the first user interface, e.g., at box 510.

At box 515, the currently selected operating mode can be configured.

For each one of the operating modes, it would be possible to define one or more of the following aspects: operating expenses while the asset operates in this operating mode; ramp rate limitations on energy production or consumption while the asset operates in this mode; maximum/minimum energy production while the asset operates in this operating mode; grid forming, redundancy etc. provided while operating in this operating mode. Thus, as a general rule, it would be possible that each operating mode is further associated with at least one operational constraint associated with the energy in/out-flow of the respective asset. These operational constraints can be configured through the first user interface, at box 515.

Next, at box 520, one or more model functions associated with the respective operating mode that is currently active can be configured via the user interface by the user. This can be done by defining respective model functions using clear-text representations, i.e., using formula-like text for representing the underlying mathematic expression

These model functions can define relations between energy in/out-flow into or out of the asset, including fuel or resources like water or nitrogen or hydrogen. Energy losses can be determined. This can depend on one or more state variables of the respective asset such as energy stored, temperature, etc. and their derivative with respect to time. Equality or inequality operators can be used to link the internal state variables to the energy in/out floor energy loss.

The model functions could be linear dependencies or nonlinear dependencies.

The clear-text representation can correspond to a text string that is input by the user and that defines mathematical operators (e.g., "plus", "minus", "multiplication", "division", "modulus", "if greater than", "if smaller than"), state variables, and parameters. The variables and/or parameters can be specified by words / placeholder strings, e.g., "StateOfCharge". Hence, the dependencies described by the model functions can be captured by plain text including numbers, simple mathematic operators, and/or parameter names, e.g.: "7*StateOfCharge"; "7.0*StateOfHealth+3"; "1/(3*Temparture+7)"; "ProportionalityFactorA*StateOfCharge"; or "EfficiencyFactor*1.3".

The first user interface can enable define, edit, add, or remove these clear-text representations. These clear-text representations can be stored as text strings in the respective software program.

At box 525, it can be checked whether a further operating mode needs to be configured, in which case a loop starting again at box 510 is executed for the next / further operating mode.

If all operating modes have been configured, the method commences at box 530; here, it is checked whether a further asset needs to be configured; in the affirmative, a loop starting again from box 505 is executed.

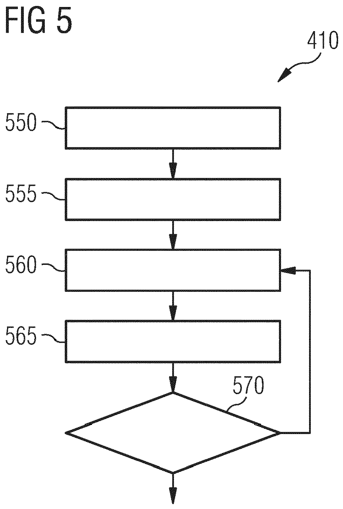

FIG. 5 is a flowchart of a method according to various examples. FIG. 5 generally pertains to parameterizing a simulation of an energy system that includes multiple assets. The method of FIG. 5 implements box 410. FIG. 5 can accordingly correspond to preparation for execution of an instance of the simulation, given certain specific values of the variables and/or parameters. FIG. 5 can accordingly follow the preparation phase of FIG. 4.

At box 550, it is possible to look through all operation modes for an asset, look through all model functions of a given operation mode, and furthermore look through all coefficients of each model function (the coefficients corresponding to the variables and/or parameters). Thereby, all variables and/or parameters (i.e., respective names/labels provided as text strings in the clear-text representation) can be identified in the model functions and it can be checked whether respective variable or parameter names already exist in the corresponding list of existing variables and/or parameter names. If a newly found variable and/or parameter name does not exist in such list, the variable and/or parameter name can be added to the list. Accordingly, it is possible, at box 550, to parse the clear-text representations of the model functions to identify the variables and/or the parameters of the model functions. Then, at box 555, duplicates of the variables and/or parameters (across multiple operating modes and/or across multiple assets) can be removed when parsing the clear-text representations of the model functions.

Then, a current variable or parameters can be selected at box 560 and, through the second user interface, the user can be enabled to assign a constant value or a time series of values to the respectively selected variable or parameter. Then, at box 570 it can be checked whether this is to be executed for a further variable or parameter; in which case, a further iteration starting at box 560 is executed.

Thereby, it is possible for every asset, operation mode, model function and coefficient to use text parsing to identify variables and/or parameters and then, at runtime of the simulation, replace the respective variable or parameter name in the clear-text representation of the model function with the appropriate value for the given time step. Values need only be set once for the variables and/or parameters and the respective set values can be propagated to all occurrences of the respective variables and/or parameters in different model functions.

Mathematical operators can be likewise transformed into calculation rules using text parsing.

Such replacement of the clear-text representation of variables and/or parameters can be executed ahead of the execution of the simulation (cf. FIG. 3: box 415); or during execution of the simulation in between time steps.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

For instance, while various scenarios have been disclosed according to which assets use multiple operating modes, assets can generally also use a single operating mode.

## Claims

1. A computer-implemented method of parameterizing a simulation of an energy system (90) that comprises multiple assets (91, 92, 93), the simulation being based on operating modes defined for each asset, each operating mode being associated with a respective model function that determines energy in/out-flow or energy loss of the respective asset depending on at least one of one or more state variables or one or more parameters of the respective asset or one or more parameters, the computer-implemented method comprising:
- providing (405) a first user interface that enables a user to configure the model functions of the operating modes by using clear-text representations of the model functions,
- providing (410) a second user interface that enables the user to set one or more values for the at least one of the one or more state variables or the one or more parameters of each model function, and
- upon setting the one or more values, executing (415) the simulation.

2. The computer-implemented method of claim 1, further comprising:
- parsing (550) the clear-text representations of the model functions to identify the at least one of the one or more state variables or the one or more parameters,
wherein the second user interface is provided in accordance with said identifying.

3. The computer-implemented method of claim 2, further comprising:
- identifying (555) duplicates of the at least one of the one or more state variables or the one or more parameters when parsing the clear-text representations of the model functions.

4. The computer-implemented method of any one of the preceding claims,
wherein the second user interface enables the user to set a time series of the values.

5. The computer-implemented method of any one of the preceding claims,
wherein the one or more state variables comprise at least one of a temperature of a respective asset, a state-of-charge of the respective asset, a state-of-health of the respective asset, or time derivatives thereof.

6. The computer-implemented method of any one of the preceding claims,
wherein each operating mode is further associated with at least one operational constraint associated with the energy in/out-flow of the respective asset.

7. The computer-implemented method of any one of the preceding claims,
wherein the first user interface further enables the user to create or delete individual ones of the operating modes.

8. The computer-implemented method of any one of the preceding claims,
wherein each operating mode is associated with a transition matrix defining transition criteria to transition from operation in one of the operating mode to operation in another one of the operating modes.

9. The computer-implemented method of any one of the preceding claims, further comprising:
- based on an output of the simulation, providing (420) control data to control at least one of the assets (91, 92, 93) and/or re-design at least one of the assets (91, 92, 93).

10. A computing device comprising at least one processor and a memory, the at least one processor being configured to load program code from the memory and to execute the program code, wherein the at least one processor, upon executing the program code, is configured to perform the method of any one of the preceding claims.

11. A computer program comprising program code that can be executed by at least one processor, execution of the program code causing the at least one processor to perform the method according to any one of claims 1 to 9.
